Europäisches Patentamt

European Patent Office

Office européen des brevets

(11) Publication number: **0 222 431**
**A1**

## EUROPEAN PATENT APPLICATION

(21) Application number: 86201775.3

(51) Int. Cl.⁴: **A01G 25/09**

(22) Date of filing: **14.10.86**

(30) Priority: **11.11.85 IT 4686585**

(43) Date of publication of application:
**20.05.87 Bulletin 87/21**

(84) Designated Contracting States:
**AT BE CH DE ES FR GB GR IT LI LU NL SE**

(71) Applicant: **IRRIGAZIONE FERBO di Bombarda Ferdinando S.p.A.**
**146, Via Roma Nord**
**I-46020 Villa Poma(Mantova)(IT)**

(72) Inventor: **Bombarda, Ferdinando**
**206, Via Roma Nord**
**I-46020 Villa Poma (Mantova)(IT)**

(74) Representative: **Corradini, Corrado**
**STUDIO SECCHI & CORRADINI 4, Via Dante Alighieri**
**I-42100 Reggio Emilia(IT)**

(54) **Self-propelled lawn sprinkler.**

(57) A self-propelled lawn sprinkler comprises a reel - (6) of horizontal axis on which there is wound a hose (7) connected to a sprinkler device arranged to slide along the ground, an electric motor (11) for rotating the reel (6), and circuit-breaker means (16, 17) which cause said electric motor to operate intermittently for periods of duration inversely proportional to the diameter of the hose already wound on said reel.

Fig. 1.

## SELF-PROPELLED LAWN SPRINKLER

This patent relates to a self-propelled sprinkler particularly suitable for automatically irrigating small pieces of ground, such as parks, smallholdings and gardens in general.

The invention enables such ground areas to be irrigated automatically in a uniform and homogeneous manner.

According to the invention the proposed sprinkler comprises a reel of horizontal axis about which there is wound a hose connected to a sprinkler device arranged to slide along the ground, and an electric motor of intermittent operation which drives the reel with a hose rewinding speed which is kept constant during the entire irrigation period as the rewinding diameter varies. For this purpose, circuit-breaker means are connected into the power supply for said motor, they being for example in the form of a rotatable cam associated with two electrical contacts, these latter being disposed on a lever system connected to a feeler which makes contact with the hose already wound on the reel.

By virtue of the aforesaid means, as the winding diameter of the hose on the reel varies, the distance between the cam and said two contacts also varies such that their closure period is inversely proportional to said winding diameter. In this manner the hose rewinding speed is kept constant, and irrigation takes place uniformly. In addition, said winding speed can be selected at will by varying the geometry of the lever system which connects said feeler to the support for said contacts. For example, the lever system geometry can be varied by a screw-internal thread device.

As an alternative to the cam device, according to the invention the power supply to the motor which rotates the reel is controlled by a central electronic unit which emits supply current for cyclic time periods which are inversely proportional to the winding diameter of the hose on the spool, in this case the motor being of the direct current type.

The constructional characteristics and merits of the invention will be more apparent from the detailed description given hereinafter with reference to the accompanying figures which illustrate a preferred embodiment thereof by way of non-limiting example.

Figure 1 is a broken-away side view of the invention.

Figure 2 is a section on the line II-II of Figure 1.

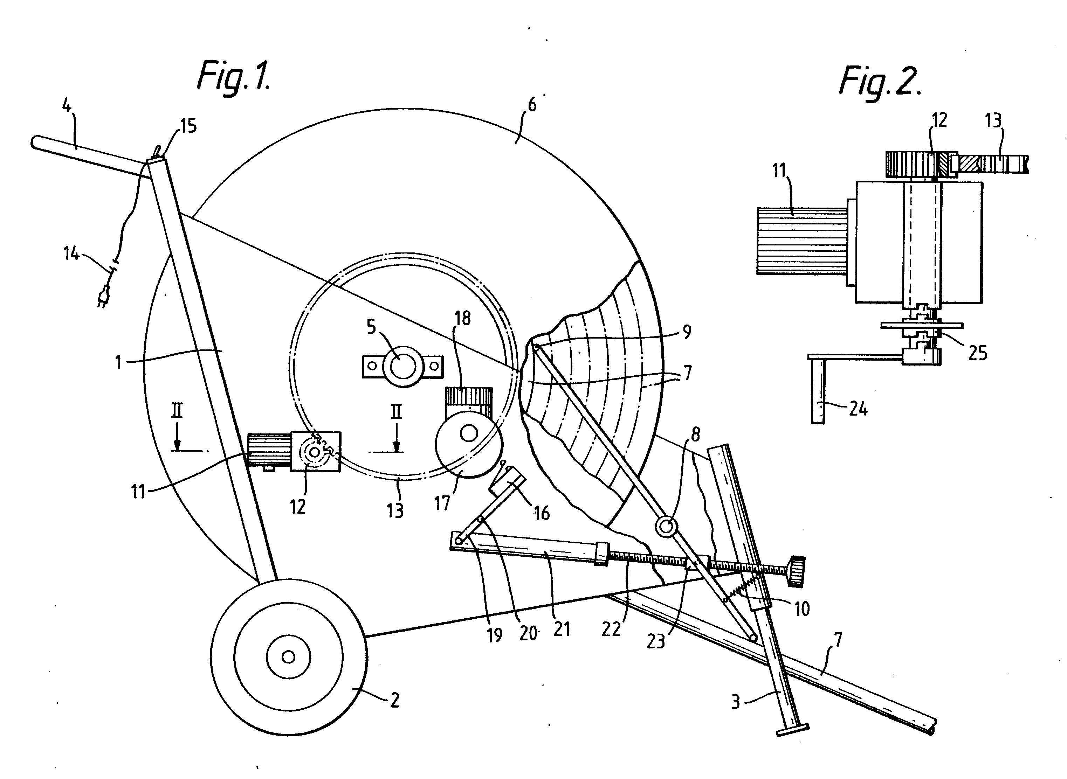

Said figures, and in particular Figure 1, show a frame 1 which is mounted on two rear wheels 2, and is provided at its front with two telescopic feet 3 arranged to keep the frame 1 stable and stationary during irrigation. Said frame 1 is provided upperly with a rear handle 4 for manipulating the invention. By way of suitable bearings, there is rotatably mounted on the sides of the frame 1 the horizontal hollow shaft 5 of a reel 6 on which a hose 7 for feeding the irrigation water is wound in several superposed layers.

The irrigation water is fed in known manner through said shaft 5, and the feed line can be connected to the normal water main or to a convenient pumping unit. Said hose 7 is connected to a normal lawn sprinkler, not shown as it can be of any type, and this sprinkler is mounted on a convenient skid, also not shown.

A feeler 9 is transversely pivoted at 8 to the front of the frame 1, and is kept constantly in contact with the hose 7 wound on the reel 6 by a convenient tension spring 10.

At commencement of irrigation, the sprinkler support skid is moved to the end of the strip of ground to be irrigated, this involving the manual unwinding of the hose 7 from the reel 6, for the rewinding of which there are provided the means described hereinafter.

As shown in Figure 1, on the right hand side of the frame 1 there is housed an alternating current electric motor 11, on the output shaft of which there is keyed a pinion 12, this latter engaging with a ring gear 13 fixed to the reel 6.

The power supply to the motor 11 passes through a cable 14 by way of a normal switch 15 and a microswitch 16. The mobile contact of this latter faces the outer edge of a disc 17 which is eccentrically keyed on the output shaft of a second electric motor 18 fixed to said side of the frame 1. During irrigation, the electric motor 18 is constantly connected to the power supply 14, whereas the electric motor 11 is supplied intermittently for periods which vary as described hereinafter.

As shown, the microswitch 16 is fixed to the end of a rocker lever 19 pivoted at 20 to the frame 1, its other end being pivoted to a rod of adjustable length. Said rod comprises a bar 21 connected to the rocker lever 19 as stated, and a threaded stem 22 which is rotatably mounted at the free end of the bar 21, and is engaged in a lateral threaded bush 23 supported by the feeler 9. The bush 23 is pivoted to this latter on a horizontal transverse axis.

With these means, as the hose 7 rewinds, the distance between the microswitch 16 and the rotatable disc 17 increases each time a new layer of hose begins to be formed, so that the closure periods of the microswitch 16 and thus the power supply to the motor 4 decrease correspondingly.

The rewinding speed can be kept constant by this means, and can be adjusted as required by screwing the threaded rod 22 into the bush 23 to a greater or lesser extent.

Moreover, with reference to Figure 2 it can be seen that means are provided for manually rewinding the hose 7 in emergency situations, said means comprising a handle 24 which, by means of a coupling device 25, can be engaged with and disengaged from the shaft on which the reel 12 is keyed.

It is also possible to provide a hose guiding device for the correct winding/unwinding of the hose 7, which device can be controlled by a chain transmission which derives its motion from a coaxial sprocket fixed to one end of the reel 6.

As an alternative to the aforesaid, the motor 1 can be of the direct current type, and in this case the mechanical control and regulating means 16, 17 and 18 are of static construction in the form of a central electronic unit comprising a rectifier block for the alternating current and an oscillator circuit, the periods of which are a function of the position of a potentiometer.

The central unit operates entirely equivalently to the mechanical means, and in known manner rectifies the alternating mains supply current and interrupts it for cyclic time intervals, the duration of which is proportional to the winding diameter of the hose on the reel.

The necessary commands reach the central unit by way of the lever 19 shown in the figure, this operating a control element external to the central unit and connected to a potentiometer or equivalent device.

This latter varies the frequency of an electronic oscillator circuit which itself cyclically interrupts the already rectified supply current fed to the motor.

The potentiometer position therefore determines the duration of the interruption intervals of the rectified current.

A detailed description of the aforesaid is omitted as it is of normal execution for experts of the art.

In Figure 3, in which those elements illustrated in Figures 1 and 2 are indicated by same reference numerals, it can be seen that the rocker lever 19 is connected to a central electronic unit 26, at which it operates a potentiometer, not shown, which controls an electronic circuit of completely usual design.

## Claims

1. A self-propelled lawn sprinkler, characterised by comprising a reel (6) of horizontal axis for rewinding a hose (7) connected to a sprinkler device arranged to slide along the ground, an electric motor for driving said reel, and an electrical distributor which is sensitive to the variations in the winding diameter of the hose on said reel and is arranged to power said motor for intermittent periods having a duration inversely proportional to the diameter of the already wound hose.

2. A sprinkler as claimed in claim 1, characterised in that said electrical distributor comprises a disc (17) which is eccentrically keyed on to the shaft of a continuously operating electric motor - (18), and to the side of which there is disposed, in a manner such as to enable its operating position to be adjusted, a microswitch (16) connected into the electrical supply cable (14) for said electric motor (11).

3. A sprinkler as claimed in claim 2, characterised in that said microswitch (16) is fixed to the end of a rocker lever (19), the other end of which is pivoted to a rod of adjustable length connected to a feeler (9) elastically urged against the hose wound on the reel.

4. A sprinkler as claimed in claim 3, characterised in that, to enable the operating position of the microswitch (16) to be adjusted, said rod comprises a bar (21) having one end pivoted to said rocker lever (19) and rotatably carrying at its other end a threaded stem (22) which is engaged in a swivelling bush (23) supported by the feeler (9).

5. A sprinkler as claimed in claim 1, characterised in that the electric drive motor for the reel is a direct current motor, the electrical distributer sensitive to variations in the hose winding diameter being an electronic circuit comprising a current rectifier circuit and an oscillator circuit, the oscillation periods of which are determined by the position of a potentiometer which is itself sensitive, by way of mechanical means, to the winding diameter of the hose on the reel.

6. A sprinkler as claimed in claim 1, characterised in that the reel (6) is rotatable on a frame - (1) provided with two rear wheels (2) and an overlying manoeuvring handle (4), and provided at its front with two telescopic stabilisation feet (3).

7. A sprinkler as claimed in claim 1, characterised in that the output shaft of said intermittently operating electric motor (11) carries keyed thereon a pinion (12) engaging with a ring gear (13) fixed to the reel, this latter, in correspondence with a support, being provided with an inlet port for the irrigation water.

8. A sprinkler as claimed in claim 1, characterised in that a rewinding handle (24) is associated, by way of an engagement/disengagement device (25), with the output shaft of said intermittently operating electric motor (11).

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 156 644 (V.B.W. HARVEY) * complete document * | 1 | A 01 G 25/09 |
| Y | | 2 | |
| | --- | | |
| Y | LANDTECHNIK, vol. 38, no. 9, September 1983, page 359, Lehrte; * page 359, left-hand column * | 2 | |
| | ----- | | |

| TECHNICAL FIELDS SEARCHED (Int. Cl.4) |
|---|
| A 01 G 25/00 |

The present search report has been drawn up for all claims

| Place of search | Date of completion of the search | Examiner |
|---|---|---|
| BERLIN | 27-01-1987 | WUNDERLICH J E |